# EUROPÄISCHE PATENTSCHRIFT

(11) **EP 1 132 420 B1**
(45) Veröffentlichungstag und Bekanntmachung des Hinweises auf die Patenterteilung: **12.04.2006**
(21) Anmeldenummer: 00127658.3
(22) Anmeldetag: 18.12.2000
(51) Int. Cl.: C08J 9/16, C08J 9/18, C08L 23/10

(54) **Verfahren zur Herstellung von Partikelfoermigen, Expandierbaren Propylenpolymerisaten**
Process for producing expandable particles of propylene polymer
Procédé de préparation de particules expansibles de polymère propylénique

(30) Priorität: 25.01.2000 DE 10003021
(43) Veröffentlichungstag der Anmeldung: 12.09.2001
(73) Patentinhaber: BASF Aktiengesellschaft, 67056 Ludwigshafen (DE)
(72) Erfinder: Maletzko, Christian, Dr., 67122 Altrip (DE); Hahn, Klaus, Dr., 67281 Kirchheim (DE); de Grave, Isidor, Dr., 67157 Wachenheim (DE); Ehrmann, Gerd, Dr., 67146 Deidesheim (DE); Dietzen, Franz-Josef, Dr., 67071 Ludwigshafen (DE)

(56) Entgegenhaltungen:
- EP-A- 0 780 206
- WO-A-00/53669
- DATABASE WPI Section Ch, Week 199410 Derwent Publications Ltd., London, GB; Class A13, AN 1994-080083 XP002167816 & JP 06 032932 A (DAINIPPON INK & CHEM KK) , 8. Februar 1994 (1994-02-08)

## Beschreibung

Die Erfindung betrifft ein Verfahren zur Herstellung von partikelförmigen, expandierbaren Propylenpolymerisaten mit einer Schüttdichte von mehr als 450 g/l durch Vermischen von Propylenpolymerisat-Schmelze mit einem flüchtigen Treibmittel auf einem Extruder, Auspressen der Schmelze und Granulieren des Schmelzestrangs.

Polyolefin-Schaumpartikel werden in steigendem Maße zur Herstellung von Schaumstoff-Formteilen im Automobilbau, im Verpackungswesen und im Freizeitbereich eingesetzt. Gegenüber ungeschäumten expandierbaren Partikeln, z.B. solchen auf Polystyrolbasis, sind Schaumpartikel aber sehr voluminös, was beim Transport und bei der Lagerung infolge des großen Raumbedarfs von Nachteil ist.

In der deutschen Patentanmeldung P 199 50 420.2 ist ein Verfahren zur Herstellung von expandierbaren Polyolefin-Partikeln beschrieben, bei dem Polyolefin-Granulat in einem Druckbehälter in wäßriger Suspension mit einem organischen Treibmittel imprägniert und der Ansatz vor dem Entspannen auf Temperaturen unter 100°C abgekühlt wird. Dabei fällt jedoch in großen Mengen Abwasser an, das in der Regel durch Suspensionsstabilisatoren verunreinigt ist.

Aus mehreren Druckschriften, z.B. EP-A 588 321 und DE-A 197 56 264 ist es bekannt, Polypropylen-Schaumpartikel durch Vermischen von Polypropylen mit einem flüchtigen Treibmittel auf einem Extruder, Auspressen unter Aufschäumen und Granulieren des Schaumstrangs herzustellen.

In der EP-A 778 310 ist ein Verfahren zur Herstellung von Polyolefin-Schaumstoffpartikeln beschrieben, bei dem in einer ersten Stufe angeschäumte Partikel mit einer Schüttdichte von 120 bis 400 g/l durch Extrusion von feste Treibmittel enthaltendem Polyolefin hergestellt werden, die dann in einer zweiten Stufe mit Wasserdampf weiter aufgeschäumt werden.

Die Herstellung von ungeschäumten, expandierbaren Propylenpolymerisat-Partikeln mit einer Schüttdichte von mehr als 450 g/l durch Extruder-Imprägnierung ist jedoch nirgends beschrieben.

Der Erfindung lag daher die Aufgabe zugrunde, ein kostengünstiges Verfahren zur Herstellung von expandierbaren Propylenpolymerisat-Partikeln zu entwickeln.

Diese Aufgabe wird gelöst durch ein Verfahren zur Herstellung von partikelförmigen, expandierbaren Propylenpolymerisaten mit einer Schüttdichte von mehr als 450 g/l durch Vermischen von 3 bis 30 Gew.-teilen eines flüchtigen.organischen Treibmittels und 0,01 bis 8 Gew.-teilen eines feinteiligen Nucleierungsmittels sowie ggf. weiteren üblichen Zusatzstoffen mit 100 Gew.-Teilen Propylenpolymerisat-Schmelze auf einem Extruder, Auspressen der Schmelze und Granulieren des Schmelzestrangs, wobei der Schmelzestrang in ein Wasserbad ausgepreßt und dort granuliert wird, welches eine Temperatur unterhalb von 100°C aufweist und unter einem Druck von mehr als 2 bar steht.

Die erfindungsgemäß hergestellten partikelförmigen, expandierbaren Propylenpolymerisate liegen als praktisch ungeschäumte Partikel mit einer Schüttdichte von mehr als 450 g/l, vorzugsweise von mehr als 500 g/l vor. Sie sind nach einstündiger Lagerung bei Raumtemperatur an freier Atmosphäre durch Erhitzen auf Temperaturen von 130 bis 160°C, insbesondere von 150°C, auf eine Schüttdichte von weniger als 300 g/l, vorzugsweise von weniger als 250 g/l aufschäumbar.

Die erste Bedingung sagt aus, daß die Propylenpolymerisat-Schmelze beim Auspressen aus dem Extruder praktisch nicht schäumt; das als Ausgangsmaterial eingesetzte Propylenpolymerisat-Granulat hat je nach Zusammensetzung und Partikelform eine Schüttdichte von 500 bis 700 g/l. Die zweite Bedingung sagt aus, daß die Propylenpolymerisat-Partikel auch bei einstündiger Lagerung an freier Atmosphäre noch ausreichend viel Treibmittel gespeichert enthalten und deshalb noch gut aufschäumbar sind. Eine einstündige Lagerung bei Raumtemperatur an freier Atmosphäre ist deshalb für die Praxis wichtig und auch realistisch, weil in der Praxis die Aufarbeitung und das Handling der treibmittelhaltigen Partikel bis zum Verpacken und nach der Entnahme aus der Verpakkung bis zum Verschäumen zusammengerechnet nicht mehr als eine Stunde dauert. Während dieser Zeit sollte möglichst wenig Treibmittel entweichen. Da die Partikel bei der Lagerung und beim Transport im allgemeinen in geschlossenen Behältern oder in gasdichten Foliensäcken verpackt sind, kann auch dabei nur unwesentlich Treibmittel entweichen. Normalerweise sind die erfindungsgemäßen treibmittelhaltigen Partikel mehrere Tage lagerbar, ohne daß größere Mengen Treibmittel entweichen. Eine längere offene Lagerung sollte allerdings vermieden werden.

Propylenpolymerisate im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.

Bevorzugt sind Homo- oder Copolymere des Propylens mit bis zu 15 Gew.-% Ethylen und/oder Buten-1, besonders bevorzugt sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Das Propylenpolymerisat kann mit bis zu 50 % seines Gewichts eines andersartigen Thermoplasten mit einer Glastemperatur (DSC-Wendepunkt) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. EXXON), zugesetzt werden können.

Bei dem erfindungsgemäßen Verfahren werden 100 Gew.-teile Propylenpolymerisat-Granulat zusammen mit 3 bis 30 Gew.-teilen eines flüchtigen organischen Treibmittels und 0,01 bis 8, vorzugsweise 0,1 bis 5 Gew.-teilen eines feinteiligen Nucleierungsmittels sowie ggf. weiteren üblichen Zusatzstoffen einem Extruder zugeführt und dort bei einer Temperatur, bei der das treibmittelhaltige Gemisch als Schmelze vorliegt, vermischt, vorzugsweise zwischen 160 und 220°C.

Geeignete Nucleierungsmittel sind z.B. Talkum, Wachse, insbesondere Polyolefin-Wachse, Paraffine, Graphitpulver, pyrogene Kieselsäuren, Citronensäureester sowie ggf. modifizierte Bentonite. Als weitere Zusatzstoffe kommen Antioxidantien, Stabilisatoren, Flammschutzmittel, Füllstoffe und Pigmente in Frage. An einer späteren Stelle des Extruders werden 3 bis 30, vorzugsweise 5 bis 25 Gew.-teile des flüchtigen organischen Treibmittels mit Hilfe einer Pumpe zudosiert. Es ist auch möglich, das Nucleierungsmittel und ggf. andere Additive erst hier, zusammen mit dem Treibmittel zuzugeben, wobei die Zusatzstoffe zweckmäßigerweise im Treibmittel gelöst bzw. suspendiert sind. Wesentlich für die Erfindung ist die richtige Wahl des Treibmittels. Sein Siedepunkt sollte zwischen -5 und 150°C, insbesondere zwischen 25 und 125°C liegen. Das Treibmittel ist vorzugsweise ein Alkan, ein Alkanol, ein Keton, ein Ether oder ein Ester. Besonders bevorzugt sind Pentane, Hexane und Heptane, insbesondere s-Pentan, ferner 3,3-Dimethyl-2-butanon und 4-Methyl-2-pentanon. Auch Treibmittelmischungen können eingesetzt werden. Das Treibmittel ist vorzugsweise halogenfrei; geringe Anteile halogenhaltiger Treibmittel im Gemisch sollen jedoch nicht ausgeschlossen werden.

Um zu verhindern, daß die Schmelze bereits beim Austritt aus dem Extruder aufschäumt, wird erfindungsgemäß das Auspressen und Granulieren des Schmelzestrangs bei solchen Temperatur- und Druckbedingungen vorgenommen, bei dem praktisch kein Schäumen des Granulats erfolgt. Diese Bedingungen können je nach der Art des Propylenpolymerisats, der Zusatzstoffe und insbesondere der Art und Menge des Treibmittels unterschiedlich sein. Die optimalen Bedingungen können durch Vorversuche einfach ermittelt werden.

Eine technisch günstige Methode ist die Unterwassergranulierung in einem Wasserbad, welches eine Temperatur unterhalb von 100°C aufweist und unter einem Druck von mehr als 2 bar steht. Die Temperatur darf nicht zu tief sein, da sonst die Schmelze an der Düsenplatte erstarrt, sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Druck sein. Bei dem besonders bevorzugten Treibmittel s-Pentan liegt die optimale Temperatur des Wasserbads zwischen 30 und 60°C, der Wasserdruck beträgt 8 bis 12 bar.

Es ist grundsätzlich auch möglich, die sogenannte Wasserringgranulierung anzuwenden. Dabei wird der Schneidraum eingekapselt, so daß die Granuliervorrichtung unter Druck betrieben werden kann.

Die treibmittelhaltigen Partikel können nach üblichen Methoden mit Heißluft oder Wasserdampf in Druckvorschäumern verschäumt werden. Beim Verschäumen mit Dampf werden je nach Art des Treibmittels, der Polymermatrix und der gewünschten Schüttdichte Dampfdrucke zwischen 2 und 4,5 bar angewandt, die Schäumzeiten variieren zwischen 3 und 30 sec, die Temperatur beim Schäumen sollte zwischen 130 und 160°C liegen. Beim einmaligen Schäumen werden Schüttdichten unter 300 g/l erreicht. Aus technischen oder wirtschaftlichen Gründen kann es zweckmäßig sein, niedrige Schüttdichten durch mehrmaliges Schäumen einzustellen.

Aus den dabei erhaltenen Schaumpartikeln können nach bekannten Methoden Schaumstoff-Formteile hergestellt werden.

### Beispiele

### Einsatzstoffe:

| | |
|---|---|
| PP: | Novolen 3200 MC; Polypropylen der Targor GmbH |
| Wachs 1: | Luwax AF31; Polyethylen (Mn 3000) der BASF AG |
| Wachs 2: | Luwax EVA3; Polyvinylacetat-Copolymer der BASF AG |
| Talkum: | Typ HP 325 |
| EMX 948: | org. modifizierter Bentonit der Fa. Süd Chemie |
| Graphit: | Graphitwerk Kropfmühl AG, Typ AF |
| MIBK: | Methylisobutylketon |
| s-Pentan: | techn. Pentanisomerengemisch |

### Herstellung und Verschäumung der Granulate

Die Einsatzstoffe wurden in den angegebenen Mengen (Gewichtsteile) gemischt und dem Extruder zugeführt. Das Treibmittel wurde im späteren Verlauf der Schnecke unter Druck in den Extruder gepumpt. Auf der Düsenplatte lastete jeweils der in der Tabelle genannte Wasserdruck, wobei auch die Wassertemperatur angegeben ist. Das abgeschlagene Granulat wurde mit dem Wasserstrom zu einem Zyklon getragen, wo es vom Wasser abgetrennt und gesammelt wurde.

Das Granulat wurde vor dem Verschäumen 1 std bei Raumtemperatur offen ausgelegt. Die Tabelle zeigt den Treibmittelgehalt und die Schüttdichte der Propylenpolymerisat-Partikel direkt nach der Extrusion bzw. nach Lagerung und Schäumen.

Die Partikel können auf üblichen Druckvorschäumern zu Schaumstoffteilchen verschäumt werden.

| | Beispiel 1 | Beispiel 2 | Beispiel 3 | Beispiel 4 |
|---|---|---|---|---|
| PP | 100 | 100 | 100 | 100 |
| Wachs 1 | 0,5 | 1 | 1 | |
| Wachs 2 | | | | 1 |
| Talkum | 1 | 1 | | |
| Graphit | | | | 1 |
| MIBK | 25 | | | |
| s-Pentan | | 10 | 15 | 10 |
| EMX 948 | | | 2 | |
| Wasserdruck [bar] | 9 | 6 | 9,5 | 8,5 |
| Wassertemp. [°C] | 50 | 55 | 50 | 50 |
| Treibmittelgeh. [TI] | 21,9 | 6,5 | 9,5 | 5,8 |
| Schüttdichte [g/l] nach der Extrusion | 555 | 500 | 455 | 515 |
| Schüttdichte [g/l] nach dem Schäumen | 280 | 245 | 237 | 250 |

## Patentansprüche

1. Verfahren zur Herstellung von partikelförmigen, expandierbaren Propylenpolymerisaten mit einer Schüttdichte von mehr als 450 g/l durch Vermischen von 3 bis 30 Gew.-teilen eines flüchtigen organischen Treibmittels und 0,01 bis 8 Gew.-teilen eines feinteiligen Nucleierungsmittels sowie ggf. weiteren üblichen Zusatzstoffen mit 100 Gew.-Teilen Propylenpolymerisat-Schmelze auf einem Extruder, Auspressen der Schmelze und Granulieren des Schmelzestrangs, **dadurch gekennzeichnet, daß** der Schmelzestrang in ein Wasserbad ausgepreßt und dort granuliert wird, welches eine Temperatur unterhalb von 100°C aufweist und unter einem Druck von mehr als 2 bar steht.

2. Verfahren nach Anspruch 1, **dadurch gekennzeichnet, dass** als Treibmittel s-Pentan eingesetzt wird und das Wasserbad eine Temperatur zwischen 30 und 60°C aufweist und unter einem Druck von 8 bis 12 bar steht.

3. Verfahren nach Anspruch 1, **dadurch gekennzeichnet, daß** das Propylenpolymerisat ein Copolymerisat des Propylens mit bis zu 15 Gew.-% Ethylen und/oder Buten-1 ist.

4. Verfahren nach Anspruch 1, **dadurch gekennzeichnet, daß** das Treibmittel ein Alkan, ein Alkanol, ein Keton, ein Ether, ein Ester oder eine Mischung davon ist.

5. Verfahren nach Anspruch 4, **dadurch gekennzeichnet, daß** das Treibmittel ein Pentan, ein Hexan, ein Heptan, 3,3-Dimethyl-2-butanon oder 4-Methyl-2-pentanon ist.

6. Verfahren nach Anspruch 1, **dadurch gekennzeichnet, daß** das Nucleierungsmittel ein Wachs, Talkum, Graphit oder ein ggf. modifizierter Bentonit ist.

## Claims

1. A process for preparing expandable propylene polymer beads with a bulk density of more than 450 g/l by mixing from 3 to 30 parts by weight of a volatile organic blowing agent and from 0.01 to 8 parts by weight of a fine-particle nucleating agent, and also, if desired, other customary additives, with 100 parts by weight of propylene polymer melt in an extruder, extruding the melt and pelletizing the extrudate, which comprises extruding the extrudate into a water bath which has a temperature below 100°C and is at a pressure above 2 bar, and pelletizing it there.

2. The process according to claim 1, wherein sec-pentane is used as blowing agent and the water bath has a temperature of from 30 to 60°C and is at a pressure of from 8 to 12 bar.

3. The process according to claim 1, wherein the propylene polymer is a copolymer of propylene with up to 15% by weight of ethylene and/or 1-butene.

4. The process according to claim 1, wherein the blowing agent is an alkane, an alkanol, a ketone, an ether, an ester or a mixture of these .

5. The process according to claim 4, wherein the blowing agent is a pentane, a hexane, a heptane, 3,3-dimethyl-2-butanone or 4-methyl-2-pentanone.

6. The process according to claim 1, wherein the nucleating agent is a wax, talc, graphite or an unmodified or modified bentonite.

## Revendications

1. Procédé de préparation de polymères de propylène sous la forme de particules expansibles dont la masse spécifique en vrac est supérieure à 450 g/l en mélangeant dans une extrudeuse de 3 à 30 parties en poids d'un agent moussant organique volatil, de 0,01 à 8 parties en poids d'un agent de nucléation finement divisé et éventuellement d'autres additifs habituels avec 100 parties en poids de masse fondue de polymère de propylène, en extrudant la masse fondue et en transformant la barre de masse fondue en granulés, **caractérisé en ce que** l'extrusion et la transformation en granulés de la barre de masse fondue sont réalisées dans un bain d'eau dont la température est inférieure à 100°C et sous une pression supérieure à 2 bars.

2. Procédé selon la revendication 1, **caractérisé en ce qu'**on utilise du s-pentane comme agent moussant et **en ce que** la température du bain d'eau est comprise entre 30 et 60°C sous une pression comprise entre 8 et 12 bars.

3. Procédé selon la revendication 1, **caractérisé en ce que** le polymère de propylène est un copolymère de propylène et de jusqu'à 15 % en poids d'éthylène et/ou de butène-1.

4. Procédé selon la revendication 1, **caractérisé en ce que** l'agent moussant est un alcane, un alcanol, une cétone, un éther, un ester ou leur mélange.

5. Procédé selon la revendication 4, **caractérisé en ce que** l'agent moussant est un pentane, un hexane, un heptane, la 3,3-diméthyl-2-butanone ou la 4-méthyl-2-pentanone.

6. Procédé selon la revendication 1, **caractérisé en ce que** l'agent de nucléation est une cire, du talc, du graphite ou une bentonite éventuellement modifiée.
